# EUROPEAN PATENT APPLICATION

(11) **EP 4 685 032 A1**
(43) Date of publication of application: **28.01.2026**
(21) Application number: 24864530.1
(22) Date of filing: 05.09.2024
(51) Int. Cl.: B61L 15/00

(54) **TRAIN-SIGNAL PROCESSING METHOD, SYSTEM AND DEVICE**

(30) Priority: 15.09.2023 CN 202311200185
(71) Applicant: CRRC ZHUZHOU ELECTRIC LOCOMOTIVE RESEARCH INSTITUTE CO., LTD., Shifeng District Zhuzhou, Hunan 412001 (CN)
(72) Inventor: MO, Yun, Zhuzhou, Hunan 412001 (CN); ZHOU, Xuexun, Zhuzhou, Hunan 412001 (CN); GAO, Yingming, Zhuzhou, Hunan 412001 (CN); LUO, Yuan, Zhuzhou, Hunan 412001 (CN); QIN, Daxuan, Zhuzhou, Hunan 412001 (CN); FENG, Furen, Zhuzhou, Hunan 412001 (CN); TANG, Junwei, Zhuzhou, Hunan 412001 (CN); SHI, Kun, Zhuzhou, Hunan 412001 (CN)
(74) Representative: Lorenz Seidler Gossel Part. mbB
(86) International application number: PCT/CN2024/117114
(87) International publication number: WO 2025/055810

(57) **Abstract**

A train-signal processing method, system and device, which are applied to the technical field of rail transit. A master processor is in communication connection with a slave processor, and a first hardware device sends a time-synchronization hard wire signal to the master processor and the slave processor at the same time. When applied to the master processor, the train-signal processing method comprises: determining whether first collected data received by means of a first input channel is consistent with second collected data sent by a slave processor; if not, entering a fail-safe state; and if so, executing a data processing operation, so as to obtain a first processing result and execute same, wherein the first collected data and the second collected data are respectively data of a target position which is collected by the master processor at a first moment and data of the target position which is collected by the slave processor at the first moment. By means of applying the solution of the present application, the reliability of a train-signal processing process is guaranteed by means of providing a master processor and a slave processor, and time synchronization of the master processor and the slave processor is realized by means of a time-synchronization hard wire signal, thereby saving on a response time in the train-signal processing process.

## Description

This application claims priority to Chinese Patent Application 2023112001856, titled "TRAIN-SIGNAL PROCESSING METHOD, SYSTEM AND DEVICE", filed on September 15, 2023 with the China National Intellectual Property Administration, which is incorporated herein by reference in its entirety.

### FIELD

The present disclosure relates to the technical field of rail transit, and in particular to a method, a system and a device for processing a train signal.

### BACKGROUND

With the increasing demand for intelligence in rail transit, some critical safety hardwires for trains, such as safety relays, are gradually being replaced by logical control units (LCUs) capable of implementing more functions and offering high functional safety levels. However, in some situations where system safety requirements are particularly stringent, maintaining existing hardware characteristics necessitates extremely high real-time performance of the LCUs with high functional safety levels. That is, the response time of the LCUs with high functional safety levels for controlling input and output signals should be less than or equal to the switching time of the safety relays.

In summary, how to shorten the response time for train signal processing and enable a device to assume the function of critical safety hardwired signals for trains while ensuring system safety is an urgent technical issue to be addressed by those skilled in the art.

### SUMMARY

The objective of present disclosure is to provide a method, a system and a device for processing a training signal, to shorten the response time for train signal processing and enable a device to assume the function of critical safety hardwired signals for trains while ensuring system safety.

To address the above technical issue, the following technical solutions are provided in the present disclosure.

A method for processing a train signal, applied to a master processor, is provided in the present disclosure. The master processor is communicatively connected to a slave processor. A first hardware device is configured to simultaneously send a time synchronization hardwire signal to the master processor and the slave processor for implementing time synchronization between the master processor and the slave processor. The method for processing the train signal includes:
receiving first acquired data via a first input channel of the master processor;
sending the first acquired data to the slave processor and receiving second acquired data from the slave processor;
determining whether the first acquired data is consistent with the second acquired data;
entering, in a case that the first acquired data is inconsistent with the second acquired data, a fail-safe state to cause each output channel of the master processor to output a preset safe level; and
performing, in a case that the first acquired data is consistent with the second acquired data, predetermined data processing on the first acquired data to obtain a first processing result of the first acquired data and executing the first processing result.

The first acquired data is acquired by the master processor from a target position at a first time instant through a first acquisition circuit, and the second acquired data is acquired by the slave processor from the target position at the first time instant through a second acquisition circuit.

In an embodiment, the method further includes:
verifying, on receiving the time synchronization hardwire signal from the first hardware device, whether a period of the time synchronization hardwire signal is identical to a preset acquisition period by using a first timer arranged in the master processor; and
entering, in a case that the period of the time synchronization hardwire signal is different from the preset acquisition period, the fail-safe state to cause the each output channel of the master processor to output the preset safe level.

In an embodiment, the sending the first acquired data to the slave processor and receiving second acquired data from the slave processor includes:
sending a first request command carrying the first acquired data and attribute information of the first acquired data to the slave processor; and
receiving a first response command carrying the second acquired data and attribute information of the acquired data from the slave processor.

In an embodiment, the first hardware device is a CPLD.

In an embodiment, the master processor and the slave processor are communicatively connected with each other in a wired communication and/or wireless communication manner.

In an embodiment, the method further includes:
after power-on, acquiring a value of an acquisition period of the master processor and receiving a value of an acquisition period of the slave processor from the slave processor;
determining whether the value of the acquisition period of the master processor is consistent with the value of the acquisition period of the slave processor;
entering, in a case that the value of the acquisition period of the master processor is inconsistent with the value of the acquisition period of the slave processor, the fail-safe state to cause the each output channel of the master processor to output the preset safe level; and
enabling the first hardware device in a case that the value of the acquisition period of the master processor is consistent with the value of the acquisition period of the slave processor, and controlling the first hardware device to simultaneously send the time synchronization hardwire signal to the master processor and the slave processor based on the acquisition period.

In an embodiment, after the first processing result of the first acquired data is obtained, the method further includes:
receiving a second processing result from the slave processor;
determining whether the first processing result is consistent with the second processing result;
entering, in a case that first processing result is inconsistent with the second processing result, the fail-safe state to cause the each output channel of the master processor to output the preset safe level; and
executing the first processing result in a case that the first processing result is consistent with the second processing result.

The second processing result is obtained by the slave processor performing the predetermined data processing on the second acquired data.

In an embodiment, the executing the first processing result includes:
controlling a level state of a first output channel of the master processor according to the first processing result.

The first output channel of the master processor is connected to a first input terminal of a first AND gate circuit, a first output channel of the slave processor is connected to a second input terminal of the first AND gate circuit, and a level state of the first output channel of the slave processor is determined by the slave processor according to the second processing result.

A method for processing a train signal, applied to a slave processor, is provided in the present disclosure. The slave processor is communicatively connected to a master processor. A first hardware device is configured to simultaneously send a time synchronization hardwire signal to the master processor and the slave processor for implementing time synchronization between the master processor and the slave processor. The method for processing the train signal includes:
receiving second acquired data via a first input channel of the slave processor;
receiving first acquired data from the master processor and sending the second acquired data to the master processor;
determining whether the first acquired data is consistent with the second acquired data;
entering, in a case that the first acquired data is inconsistent with the second acquired data, a fail-safe state to cause each output channel of the slave processor to output a preset safe level; and
performing, in a case that the first acquired data is consistent with the second acquired data, predetermined data processing on the second acquired data to obtain a second processing result of the second acquired data and executing the second processing result.

The first acquired data is acquired by the master processor from a target position at a first time instant through a first acquisition circuit, and the second acquired data is acquired by the slave processor from the target position at the first time instant through a second acquisition circuit.

In an embodiment, the method further includes:
verifying, on receiving the time synchronization hardwire signal from the first hardware device, whether a period of the time synchronization hardwire signal is identical to a preset acquisition period by using a second timer arranged in the slave processor; and
entering, in a case that the period of the time synchronization hardwire signal is different from the preset acquisition period, the fail-safe state to cause the each output channel of the slave processor to output the preset safe level.

In an embodiment, the receiving first acquired data from the master processor and sending the second acquired data to the master processor includes:
receiving a first request command carrying the first acquired data and attribute information of the first acquired data from the master processor; and
sending a first response command carrying the second acquired data and attribute information of the second acquired data to the master processor.

In an embodiment, the method further includes:
after power-on, acquiring a value of an acquisition period of the slave processor and sending the value to the master processor and receiving a value of an acquisition period of the master processor from the master processor;
determining whether the value of the acquisition period of the slave processor is consistent with the value of the acquisition period of the master processor; and
entering, in a case that the value of the acquisition period of the slave processor is inconsistent with the value of the acquisition period of the master processor, the fail-safe state to cause the each output channel of the slave processor to output the preset safe level.

In an embodiment, after the second processing result of the second acquired data is obtained, the method further includes:
receiving a first processing result from the master processor;
determining whether the first processing result is consistent with the second processing result;
entering, in a case that the first processing result is inconsistent with the second processing result, the fail-safe state to cause the each output channel of the slave processor to output the preset safe level; and
executing the second processing result in a case that the first processing result is consistent with the second processing result.

The first processing result is obtained by the slave processor performing the predetermined data processing on the first acquired data.

In an embodiment, the executing the second processing result includes:
controlling a level state of a first output channel of the slave processor according to the second processing result.

A first output channel of the master processor is connected to a first input terminal of a first AND gate circuit, a first output channel of the slave processor is connected to a second input terminal of the first AND gate circuit, and a level state of the first output channel of the master processor is determined by the master processor according to the first processing result.

A system for processing a train signal, applied to a master processor, is provided in the present disclosure. The master processor is communicatively connected to a slave processor. A first hardware device is configured to simultaneously send a time synchronization hardwire signal to the master processor and the slave processor for implementing time synchronization between the master processor and the slave processor. The system for processing a train signal includes:
a first acquired data receiving module, configured to receive first acquired data via a first input channel of the master processor;
a first synchronization module, configured to send the first acquired data to the slave processor and receive second acquired data from the slave processor;
a first determination module, configured to determine whether the first acquired data is consistent with the second acquired data, and further configured to:
   trigger a first fail-safe module in a case that the first acquired data is inconsistent with the second acquired data, where the first fail-safe module is configured to enter a fail-safe state to cause each output channel of the master processor to output a preset safe level; and
   trigger a first processing result determination module in a case that the first acquired data is consistent with the second acquired data, where the first processing result determination module is configured to perform predetermined data processing on the first acquired data to obtain a first processing result of the first acquired data; and
a first processing result execution module, configured to execute the first processing result.

The first acquired data is acquired by the master processor from a target position at a first time instant through a first acquisition circuit, and the second acquired data is acquired by the slave processor from the target position at the first time instant through a second acquisition circuit.

A system for processing a train signal, applied to a slave processor, is provided in the present disclosure. The slave processor is communicatively connected to a master processor. A first hardware device is configured to simultaneously send a time synchronization hardwire signal to the master processor and the slave processor for performing time synchronization between the master processor and the slave processor. The system for processing a train signal includes:
a second acquired data receiving module, configured to receive second acquired data via a first input channel of the slave processor;
a second synchronization module, configured to receive first acquired data from the master processor and send the second acquired data to the master processor;
a second determination module, configured to determine whether the first acquired data is consistent with the second acquired data, and further configured to:
   trigger a second fail-safe module in a case that the first acquired data is inconsistent with the second acquired data, where the second fail-safe module is configured to enter a fail-safe state to cause each output channel of the slave processor to output a preset safe level; and
   trigger a second processing result determination module in a case that the first acquired data is consistent with the second acquired data, where the second processing result determination module is configured to perform predetermined data processing on the second acquired data to obtain a second processing result of the second acquired data; and
a second processing result execution module, configured to execute the second processing result.

The first acquired data is acquired by the master processor from a target position at a first time instant through a first acquisition circuit, and the second acquired data is acquired by the slave processor from the target position at the first time instant through a second acquisition circuit.

A device for processing a train signal is provided in the present disclosure. The device includes:
a memory, configured to store a computer program; and
a processor, configured to, when executing the computer program, perform the method for processing the train signal as described above.

By applying the technical solutions provided according to embodiments of the present disclosure, an LCU is implemented based on a master processor and a slave processor. Data processing is performed only when acquired data of the master processor is consistent with acquired data of the slave processor, thereby ensuring system safety. Furthermore, to shorten the response time, in the technical solutions of the present disclosure, time synchronization between the master processor and the slave processor is performed based on a first hardware device instead of communication between the master processor and the slave processor. The first hardware device simultaneously sends a time synchronization hardwire signal to the master processor and the slave processor such that time synchronization is performed between the master processor and the slave processor. The time synchronization is performed based on the time synchronization hardwire signal, accelerating time synchronization between the master processor and the slave processor and thereby shortening the response time for train signal processing by the master processor.

When processing a train signal, the master processor may receive first acquired data via a first input channel of the master processor, send the first acquired data to the slave processor, and receive second acquired data from the slave processor. The first acquired data is acquired by the master processor from a target position at a first time instant through a first acquisition circuit, and the second acquired data is acquired by the slave processor from the target position at the first time instant through a second acquisition circuit. In normal cases, the master processor determines that the first acquired data is consistent with the second acquired data, further performs predetermined data processing on the first acquired data to obtain a first processing result of the first acquired data, and executes the first processing result. In a case that the first acquired data is inconsistent with the second acquired data, an anomaly occurs. In this case, for purpose of system safety, the master processor enters a fail-safe state such that each output channel of the master processor outputs a preset safe level.

In summary, according to the technical solutions of the present disclosure, a master processor and a slave processor are configured, ensuring the safety and reliability of train signal processing. In addition, time synchronization between the master processor and the slave processor is achieved based on a time synchronization hardwire signal sent by a first hardware device, accelerating time synchronization and thereby shortening the response time for train signal processing by the master processor. That is, on the premise of ensuring system safety, a device including the master processor and the slave processor according to the present disclosure is capable of assuming the function of an existing critical safety hardwire signal for a train.

### BRIEF DESCRIPTION OF THE DRAWINGS

For more clearly illustrating embodiments of the present disclosure or technical solutions in the conventional technology, drawings referred to for describing the embodiments or the conventional technology are briefly described hereinafter. Apparently, the drawings in the following description are only some embodiments of the present disclosure, and for those skilled in the art, other drawings may be obtained based on the provided drawings without any creative efforts.
FIG. 1 is a flowchart of a method for processing a train signal, applied to a master processor, according to the present disclosure;
FIG. 2 is a schematic structural diagram showing a first hardware device simultaneously sending a time synchronization hardwire signal to a master processor and a slave processor according to an embodiment of the present disclosure;
FIG. 3 is a schematic diagram showing data interaction between a master processor and a slave processor during train signal processing by the master processor according to an embodiment of the present disclosure;
FIG. 4 is a flowchart of a method for processing a train signal, applied to a slave processor, according to the present disclosure;
FIG. 5 is a schematic structural diagram of a system for processing a train signal, applied to a master processor, according to the present disclosure; and
FIG. 6 is a schematic structural diagram of a system for processing a train signal, applied to a slave processor, according to the present disclosure.

### DETAILED DESCRIPTION

The core of the present disclosure is to provide a method for processing a train signal. According to the method, a master processor and a slave processor are configured to ensure the safety and reliability of train signal processing. In addition, time synchronization between the master processor and the slave processor is achieved based on a time synchronization hardwire signal sent by a first hardware device, accelerating time synchronization and thereby shortening the response time for train signal processing by the master processor. That is, on the premise of ensuring system safety, a device including the master processor and the slave processor according to the present disclosure is capable of assuming the function of an existing critical safety hardwire signal for a train.

To enable those skilled in the art to better understand the solutions of the present disclosure, the present disclosure is further described in detail hereinafter in conjunction with the accompanying drawings and embodiments. Apparently, the described embodiments are only some of the embodiments of the present disclosure, rather than all of the embodiments. All other embodiments obtained by those skilled in the art based on the embodiments of the present disclosure without any creative work fall within the protection scope of the present disclosure.

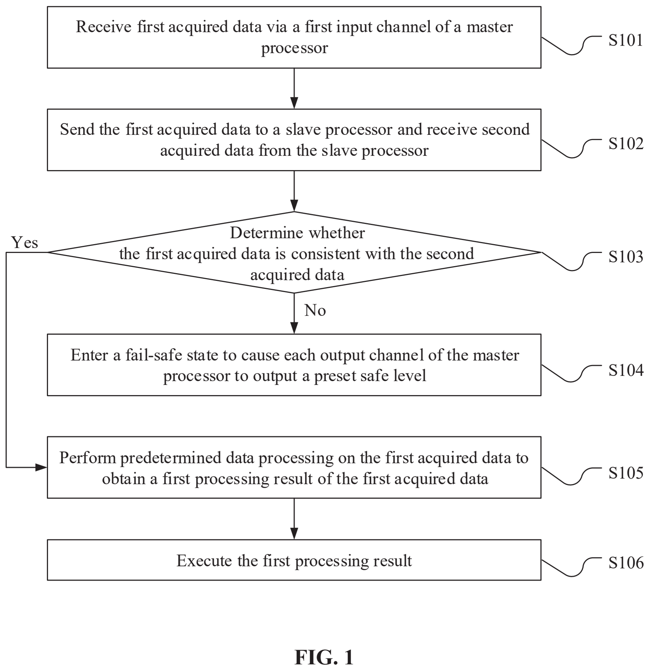

Reference is made to FIG. 1, which is a flowchart of a method for processing a train signal according to the present disclosure. The method for processing the train signal may be applied to a master processor. The master processor is communicatively connected to a slave processor. A first hardware device is configured to simultaneously send a time synchronization hardwire signal to the master processor and the slave processor such that time synchronization is performed between the master processor and the slave processor. The method for processing the train signal includes the following steps S101 to S106.

In step S101, first acquired data is received via a first input channel of the master processor.

In an embodiment, according to the solution of the present disclosure, an LCU is implemented based on the master processor and the slave processor to ensure system reliability. That is, during train signal processing, data consistency between the master processor and the slave processor may be verified in multiple processes to ensure the reliability, which is described in detail in the following embodiments.

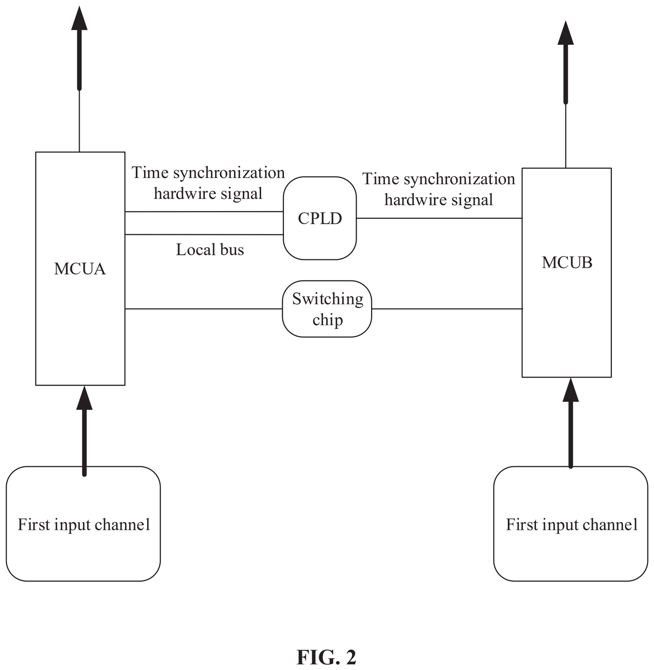

In practice, a micro controller unit (MCU) may be adopted as a processor. For example, in a case shown in FIG. 2, MCUA represents a master processor according to the present disclosure and MCUB represents a slave processor according to the present disclosure.

In the solution of the present disclosure, a first hardware device is configured. The first hardware device is for simultaneously sending a time synchronization hardwire signal to the master processor and the slave processor to achieve time synchronization between the master processor and the slave processor based on the time synchronization hardwire signal. It can be seen that, in the solution of the present disclosure, the first hardware device is configured between the master processor and the slave processor to send a time synchronization hardwire signal to the master processor and the slave processor. Compared with time synchronization through communication between the master processor and the slave processor, a duration required for time synchronization according to the present disclosure is shortened. Thus, the response time for train signal processing by the master processor is reduced, and, similarly, the response time for train signal processing by the slave processor is reduced.

The first hardware device may be implemented in various types. Any type of the first hardware device may be adopted as long as the first hardware device meets the requirements of the solution in the present disclosure. That is, the first hardware device is required to be capable of simultaneously sending a time synchronization hardwire signal to both the master processor and the slave processor. For example, in an embodiment of the present disclosure, the first hardware device is implemented by a complex programmable logic device (CPLD). The CPLD features high reliability, flexibility, and adaptiveness to various circuit requirements. With the CPLD, the functional demand for the first hardware device according to the present disclosure, that is, sending a time synchronization hardwire signal, is effectively fulfilled. In an embodiment shown in FIG. 2, the first hardware device is implemented by a CPLD.

The master processor may receive the first acquired data via the first input channel of the master processor. Generally, the master processor periodically receives acquired data via the first input channel. In addition, it can be understood that, in practice, the master processor may be provided with multiple input channels. The first input channel described in the present disclosure may be any one of the input channels of the master processor. Different input channels of the master processor may be configured to receive data acquired from different acquisition positions. That is, the first input channel is described as an example in the present disclosure. Data sent to the master processor via other input channels may also be processed according to the principle of the present disclosure, which is not repeated herein.

In step S102, the first acquired data is sent to the slave processor and second acquired data from the slave processor is received.

On receiving the first acquired data, the master processor sends the first acquired data to the slave processor, and the slave processor sends the received second acquired data to the master processor.

In the solution of the present disclosure, the first acquired data is acquired by the master processor from a target position at a first time instant through a first acquisition circuit, and the second acquired data is acquired by the slave processor from the target position at the first time instant through a second acquisition circuit.

That is, the first acquired data and the second acquired data are acquired from a same acquisition position at a same time instant. Therefore, in normal cases, the first acquired data and the second acquired data are consistent with each other.

For example, in a situation, it is required to acquire voltage data from a specific position. The first acquisition circuit acquires a voltage value from the position at a time instant and sends the voltage value to the master processor. The second acquisition circuit acquires a voltage value from the position at the time instant and sends the voltage value to the slave processor. The voltage values respectively acquired by the first acquisition circuit and the second acquisition circuit from the same position at the same time instant are consistent with each other. That is, the first acquired data and the second acquired data are consistent with each other.

On receiving the first acquired data from the master processor, the slave processor sends a response. That is, the slave processor sends the second acquired data that is acquired at the same time instant of receiving the first acquired data to the master processor.

In an embodiment of the present disclosure, step S102 includes the following first step and second step.

In the first step, a first request command carrying the first acquired data and attribute information of the first acquired data is sent to the slave processor.

In the second step, a first response command carrying the second acquired data and attribute information of the second acquired data is received from the slave processor.

According to the embodiment, after the first acquired data is sent to the slave processor, the slave processor determines a time instant when the first acquired data is acquired and a position from which the first acquired data is acquired. Based on the time instant and the position, the slave processor determines second acquired data that is acquired at the same time instant and from the same position, and sends the second acquired data to the master processor.

In the embodiment, the first request command is sent to the slave processor. The first request command carries the first acquired data and attribute information of the first acquired data. It can be understood that the attribute information of the first acquired data is for indicating an acquisition time instant and an acquisition position of the first acquired data. Similarly, attribute information of the second acquired data is for indicating an acquisition time instant and an acquisition position of the second acquired data. It can be understood that, in normal cases, the acquisition time instant and the acquisition position indicated in the attribute information of the first acquired data are consistent with the acquisition time instant and the acquisition position indicated in the attribute information of the second acquired data.

For example, in a specific situation, the attribute information of the first acquired data includes an application execution period number and a channel number. The master processor periodically receives the first acquired data via a first input channel. The application execution period number described herein represents a number for a current period in which the master processor is receiving the first acquired data. It can be understood that, in normal cases, an application execution period number included in the attribute information of the second acquired data is consistent with the application execution period number included in the attribute information of the first acquired data, which means that the first acquired data and the second acquired data are acquired at the same time instant.

The channel number in the attribute information of the first acquired data indicates an input channel via which the master processor receives the first acquired data, that is, the channel number indicates the acquisition position of the first acquired data. Similarly, the channel number in the attribute information of the second acquired data indicates an input channel via which the slave processor receives the second acquired data, that is, the channel number indicates the acquisition position of the second acquired data. In practice, to facilitate comparison, respective channels with a same channel number of the master processor and the slave processor are generally adopted for a same acquisition position. For example, in terms of the acquired voltage values in the above example, the master processor receives the first acquired data via an input channel numbered 01 of the master processor, and the slave processor receives the second acquired data via an input channel numbered 01 of the slave processor.

In step S103, it is determined whether the first acquired data is consistent with the second acquired data. In a case that the first acquired data is inconsistent with the second acquired data, step S 104 is performed. In a case that the first acquired data is consistent with the second acquired data, step S 105 is performed.

On receiving the first acquired data and the second acquired data, the master processor determines whether the first acquired data is consistent with the second acquired data.

In step S104, a fail-safe state is entered, such that each output channel of the master processor outputs a preset safe level.

In the case that the first acquired data is inconsistent with the second acquired data, the master processor enters the fail-safe state. After the master processor enters the fail-safe state, each output channel of the master processor outputs the preset safe level. For example, the preset safe level is generally a low level. That is, after the master processor enters the fail-safe state, each output channel of the master processor generally outputs 0.

In step S105, predetermined data processing is performed on the first acquired data to obtain a first processing result of the first acquired data.

In the case that the first acquired data is consistent with the second acquired data, the first acquired data is generally correct, and therefore the predetermined data processing is performed on the first acquired data. For example, in a situation, the first acquired data is a voltage at a specific position. For example, the predetermined data processing is performed by determining, based on the voltage, whether an overvoltage or an undervoltage occurs. If an overvoltage or an undervoltage occurs, the first processing result is that the voltage is abnormal and a high-level signal is to be outputted. Otherwise, the first processing result is that the voltage is normal and a low-level signal is to be outputted.

In addition, it can be understood that, in the solution of the present disclosure, the master processor determines whether the first acquired data is consistent with the second acquired data, and thus determining whether to enter the fail-safe state. Similarly, on receiving the first acquired data, in addition to sending the second acquired data to the master processor, the slave processor may further determine whether the first acquired data is consistent with the second acquired data, and thus determining whether to enter the fail-safe state.

Similarly, upon determining that the first acquired data is inconsistent with the second acquired data, the slave processor may enter the fail-safe state such that each output channel of the slave processor outputs the preset safe level. Upon determining that the first acquired data is consistent with the second acquired data, the slave processor may perform predetermined data processing on the second acquired data to obtain a second processing result of the second acquired data. It can be understood that the predetermined data processing performed on the second acquired data by the slave processor and the predetermined data processing performed on the first acquired data by the master processor may be consistent, that is, applications for performing the predetermined data processing may be consistent.

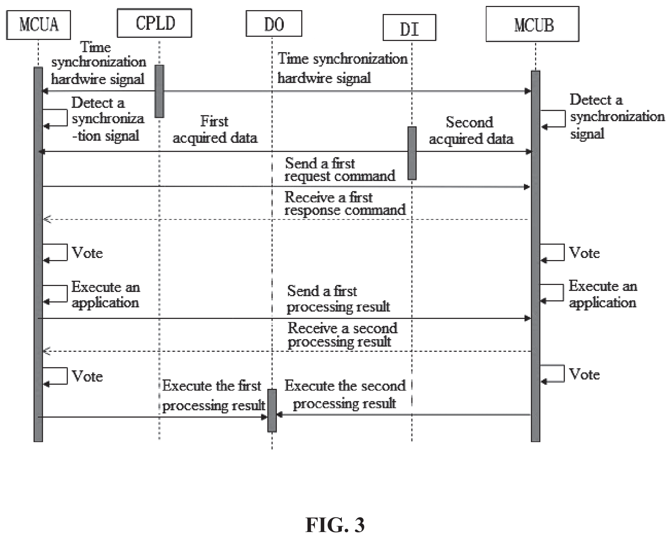

Reference is made to FIG. 3, which is a schematic diagram showing data interaction between a master processor and a slave processor during train signal processing by the master processor according to an embodiment of the present disclosure. In FIG. 3, a CPLD simultaneously sends a time synchronization hardwire signal to a master processor and a slave processor. DI shown in FIG. 3 represents first acquired data received by the master processor, and second acquired data received by the slave processor, which are acquired at a same time instant and from a same position. The master processor shown in FIG. 3 may send a first request command carrying the first acquired data to the slave processor, and receive a first response command carrying the second acquired data from the slave processor. Then, the master processor and the slave processor perform voting as shown in FIG. 3, that is, both the master processor and the slave processor determine whether the first acquired data is consistent with the second acquired data. In a case that both the master processor and the slave processor determine that the first acquired data is consistent with the second acquired data, both the master processor and the slave processor perform predetermined data processing, that is, the master processor and the slave processor respectively execute an application as shown in FIG. 3.

In step S106, the first processing result is executed.

The first processing result of the first acquired data may be executed after being obtained. For example, in a situation described above, the first processing result is that the voltage is normal and a low-level signal is to be outputted. The master processor may, for example, output a low level via a first output channel.

In an implementation according to the present disclosure, after the first processing result of the first acquired data is obtained, the method further includes:
receiving a second processing result from the slave processor;
determining whether the first processing result is consistent with the second processing result;
entering, in a case that first processing result is inconsistent with the second processing result, the fail-safe state to cause each output channel of the master processor to output the preset safe level; and
executing the first processing result in a case that the first processing result is consistent with the second processing result.

The second processing result is obtained by the slave processor performing the predetermined data processing on the second acquired data.

In the above-described embodiments, it is determined whether the first acquired data is consistent with the second acquired data. In the embodiment, it is further determined the consistency between the processing results obtained through predetermined data processing, to further ensure the output reliability.

It can be understood that since it is determined the consistency between the processing results obtained through predetermined data processing on the acquired data, in addition to the master processor performing the predetermined data processing on the first acquired data to obtain the first processing result of the first acquired data, the slave processor performs predetermined data processing on the second acquired data to obtain the second processing result of the second acquired data and sends the second processing result to the master processor. The master processor determines, after receiving the first processing result from the slave processor, whether the first processing result is consistent with the second processing result.

In a case that the master processor determines that the first processing result is consistent with the second processing result, it is determined that the obtained first processing result is correct, and the first processing result is executed. In a case that the master processor determines that the first processing result is inconsistent with the second processing result, an anomaly may occur in a calculation process performed by the master processor or a calculation process performed by the slave processor. In this case, for system safety purposes, the master processor may enter the fail-safe state such that each output channel of the master processor outputs a preset safe level.

Similarly, the slave processor may also determine whether the first processing result is consistent with the second processing result. In a case that the slave processor determines that the first processing result is consistent with the second processing result, the slave processor executes the second processing result. In a case that the slave processor determines that the first processing result is consistent with the second processing result, the slave processor enters the fail-safe state such that each output channel of the slave processor outputs the preset safe level.

In a situation shown in FIG. 3, after the master processor receives the second processing result, the master processor and the slave processor respectively perform voting, as shown in FIG. 3. That is, both the master processor and the slave processor determine whether the first processing result is consistent with the second processing result, and determine, based on the determination result, whether to enter the fail-safe state.

In an implementation of the present disclosure, step S106 further includes:
controlling a level state of a first output channel of the master processor according to the first processing result.

The first output channel of the master processor is connected to a first input terminal of a first AND gate circuit, a first output channel of the slave processor is connected to a second input terminal of the first AND gate circuit, and a level state of the first output channel of the slave processor is determined by the slave processor according to the second processing result.

In the embodiment, the first processing result is generally consistent with the second processing result. Therefore, one AND gate circuit may be configured to further ensure the output reliability without affecting an output channel signal in normal cases.

In the embodiment, the master processor executing the first processing result is implemented by: controlling the level state of the first output channel of the master processor according to the first processing result. The first output channel of the master processor is not a final output channel. The first output channel of the master processor is connected to the first input terminal of the first AND gate circuit and the first output channel of the slave processor is connected to the second input terminal of the first AND gate circuit. The slave processor controls the level state of the first output channel of the slave processor according to the second processing result.

For example, in normal cases, the first processing result is consistent with the second processing result. When the master processor controls the first output channel of the master processor to output 1 according to the first processing result, the slave processor controls the first output channel of the slave processor to output 1 according to the second processing result. Therefore, the first AND gate circuit outputs 1. Accordingly, when the respective first output channels of the master processor and the slave processor output 0, the first AND gate circuit outputs 0. It can be seen that the first AND gate circuit does not affect a system output in normal cases.

For example, in a situation, the first processing result is consistent with the second processing result but an error occurs in a process of executing the first processing result or a process of executing the second processing result. It can be seen from the principle of an AND gate that an output terminal of the AND gate circuit remains at 0 unless both input terminals of the AND gate circuit are simultaneously at 1, that is, an output of the AND gate circuit is at a safe level. Thus, anomalies are prevented, further ensuring reliability.

In FIG. 3, the master processor and the slave processor respectively execute the first processing result and the second processing result based on a same DO, indicating that the final output is determined by using the first AND gate circuit.

In an implementation of the present disclosure, the method further includes:
verifying, on receiving the time synchronization hardwire signal from the first hardware device, whether a period of the time synchronization hardwire signal is identical to a preset acquisition period by using a first timer arranged in the master processor; and
entering, in a case that the period of the time synchronization hardwire signal is different from the preset acquisition period, the fail-safe state to cause each output channel of the master processor to output the preset safe level.

In the embodiment, according to the solution of the present disclosure, time synchronization is performed between the master processor and the slave processor based on the time synchronization hardwire signal sent by the first hardware device. In the embodiment, to ensure the reliability of time synchronization, the master processor verifies, on receiving the time synchronization hardwire signal from the first hardware device, whether the period of the time synchronization hardwire signal is identical to the preset acquisition period by using the first timer arranged in the master processor. If the period of the time synchronization hardwire signal is different from the preset acquisition period, an anomaly occurs. Therefore, to ensure the reliability, the master processor enters a fail-safe state.

For example, in a situation, the first timer arranged in the main processor is configured with a precision of 1 ms, that is, the count value of the first timer is incremented by 1 every 1 ms, typically causing an interrupt to handle an event. The time synchronization hardwire signal is typically a clock signal. An interval between two adjacent clock pulses of the time synchronization hardwire signal may be determined based on the count value of the first timer, and the period of the time synchronization hardwire signal is determined according to the interval. Thus, it may be determined whether the period of the time synchronization hardwire signal is consistent with the preset acquisition period.

Similarly, in practice, the slave processor may verify, on receiving the time synchronization hardwire signal from the first hardware device, whether the period of the time synchronization hardwire signal is identical to a preset acquisition period by using a second timer arranged in the slave processor. If the period of the time synchronization hardwire signal is different from the preset acquisition period, an anomaly occurs. Therefore, to ensure the reliability, the slave processor may enter the fail-safe state.

In addition, it can be understood that the acquisition period preset for the slave processor is consistent with the acquisition period preset for the master processor and is used by the slave processor when receiving the second acquired data. Synchronization signal detection shown in FIG. 3 indicates that both the master processor and the slave processor verify whether the period of the time synchronization hardwire signal is identical to the preset acquisition period.

In the solution of the present disclosure, data interaction is performed between the master processor and the slave processor according to an embodiment of the present disclosure. The master processor and the slave processor are communicatively connected with each other in a wired communication and/or wireless communication manner to ensure the flexibility of the solution. In addition, in some situations, a device may be configured to implement the communication connection between the master processor and the slave processor. For example, in the situation shown in FIG. 2, the communication connection between the master processor and the slave processor is implemented by a switching chip, that is, the master processor and the slave processor may send communication data to each other through the switching chip in compliance with a preset protocol.

In an implementation of the present disclosure, the method further includes:
after power-on, acquiring a value of an acquisition period of the master processor and receiving a value of an acquisition period of the slave processor from the slave processor;
determining whether the value of the acquisition period of the master processor is consistent with the value of the acquisition period of the slave processor;
entering, in a case that the value of the acquisition period of the master processor is inconsistent with the value of the acquisition period of the slave processor, the fail-safe state to cause each output channel of the master processor to output the preset safe level; and
enabling the first hardware device in a case that the value of the acquisition period of the master processor is consistent with the value of the acquisition period of the slave processor, and controlling the first hardware device to simultaneously send the time synchronization hardwire signal to the master processor and the slave processor based on the acquisition period.

In the embodiment, a value of the acquisition period is preset, and the acquisition period stored on the master processor and the acquisition period stored on the slave processor are consistent. After being powered on, the master processor acquires the value of the acquisition period of the master processor and receives the value of the acquisition period of the slave processor from the slave processor. In a case that the values of the acquisition periods are inconsistent, the master processor enters the fail-safe state such that each output channel of the master processor outputs a preset safe level, thereby ensuring system safety.

Accordingly, the values of the acquisition periods being consistent indicates that the master processor and the slave processor store a same correct acquisition period. Therefore, the master processor may enable the first hardware device and control the first hardware device to simultaneously send a time synchronization hardwire signal to the master processor and the slave processor according to the acquisition period. That is, after being powered on, the master processor may set a period of a time synchronization hardwire signal to be sent by the first hardware device. In the embodiment shown in FIG. 2, the master processor MCUA sets a period of a time synchronization hardwire signal which is to be sent by the CPLD via a local bus.

In addition, it can be understood that, after being powered on, the master processor may send the acquired value of the acquisition period of the master processor to the slave processor. The slave processor determines whether the value of the acquisition period of the slave processor is consistent with the value of the acquisition period received from the master processor. In the case that the values of the acquisition periods are inconsistent, the slave processor enters the fail-safe state such that each output channel of the slave processor outputs a preset safe level.

By applying the technical solutions provided according to embodiments of the present disclosure, an LCU is implemented based on a master processor and a slave processor. Data processing is performed only when acquired data of the master processor is consistent with acquired data of the slave processor, thereby ensuring system safety. Furthermore, to shorten the response time, in the technical solutions of the present disclosure, time synchronization between the master processor and the slave processor is performed based on a first hardware device instead of communication between the master processor and the slave processor. The first hardware device simultaneously sends a time synchronization hardwire signal to the master processor and the slave processor such that time synchronization is performed between the master processor and the slave processor. The time synchronization is performed based on the time synchronization hardwire signal, accelerating time synchronization between the master processor and the slave processor and thereby shortening the response time for train signal processing by the master processor.

When processing a train signal, the master processor may receive first acquired data via a first input channel of the master processor, send the first acquired data to the slave processor, and receive second acquired data from the slave processor. The first acquired data is acquired by the master processor from a target position at a first time instant through a first acquisition circuit, and the second acquired data is acquired by the slave processor from the target position at the first time instant through a second acquisition circuit. In normal cases, the master processor determines that the first acquired data is consistent with the second acquired data, further performs predetermined data processing on the first acquired data to obtain a first processing result of the first acquired data, and executes the first processing result. In a case that the first acquired data is inconsistent with the second acquired data, an anomaly occurs. In this case, for purpose of system safety, the master processor enters a fail-safe state such that each output channel of the master processor outputs a preset safe level.

In summary, according to the technical solutions of the present disclosure, a master processor and a slave processor are configured, ensuring the safety and reliability of train signal processing. In addition, time synchronization between the master processor and the slave processor is achieved based on a time synchronization hardwire signal sent by a first hardware device, accelerating time synchronization and thereby shortening the response time for train signal processing by the master processor. That is, on the premise of ensuring system safety, a device including the master processor and the slave processor according to the present disclosure is capable of assuming the function of an existing critical safety hardwire signal for a train.

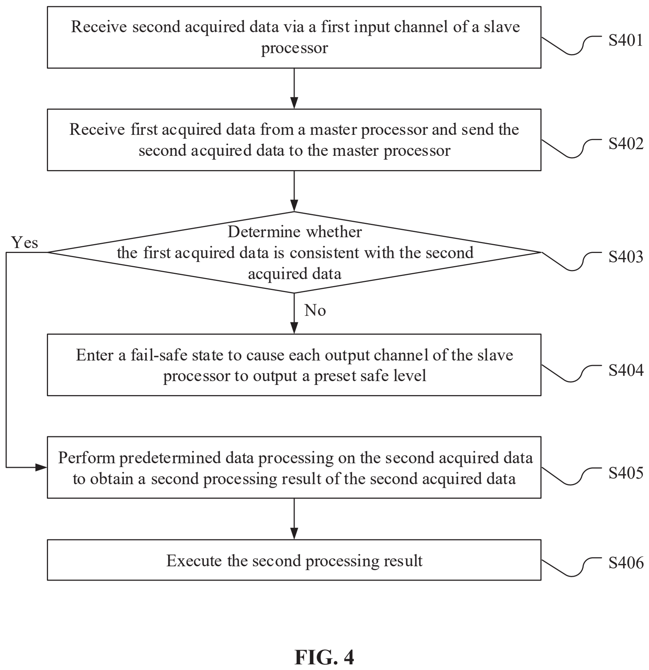

In correspondence with the above-described embodiments, a method for processing a train signal, applied to a slave processor, is provided in an embodiment of the present disclosure. The slave processor is communicatively connected to a master processor. A first hardware device is configured to simultaneously sending a time synchronization hardwire signal to the master processor and the slave processor such that time synchronization is performed between the master processor and the slave processor. As shown in FIG. 4, the method for processing the train signal includes the following steps S401 to S406.

In step S401, second acquired data is received via a first input channel of the slave processor.

In step S402, first acquired data from the master processor is received and the second acquired data is sent to the master processor.

In step S403, it is determined whether the first acquired data is consistent with the second acquired data.

In a case that the first acquired data is inconsistent with the second acquired data, step S404 is performed, that is, the fail-safe state is entered, such that each output channel of the slave processor outputs a preset safe level.

In a case that the first acquired data is consistent with the second acquired data, step S405 is performed, that is, predetermined data processing is performed on the second acquired data to obtain a second processing result of the second acquired data.

In step S406, the second processing result is executed.

The first acquired data is acquired by the master processor from a target position at a first time instant through a first acquisition circuit, and the second acquired data is acquired by the slave processor from the target position at the first time instant through a second acquisition circuit.

In an implementation of the present disclosure, the method further includes:
verifying, on receiving the time synchronization hardwire signal from the first hardware device, whether a period of the time synchronization hardwire signal is identical to a preset acquisition period by using a second timer arranged in the slave processor; and
entering, in a case that the period of the time synchronization hardwire signal is different from the preset acquisition period, the fail-safe state to cause each output channel of the slave processor to output the preset safe level.

In an implementation of the present disclosure, receiving first acquired data from the master processor and sending the second acquired data to the master processor includes:
receiving a first request command carrying the first acquired data and attribute information of the first acquired data from the master processor; and
sending a first response command carrying the second acquired data and attribute information of the second acquired data to the master processor.

In an implementation of the present disclosure, the method further includes:
after power-on, acquiring a value of an acquisition period of the slave processor and sending the value to the master processor and receiving a value of an acquisition period of the master processor from the master processor;
determining whether the value of the acquisition period of the slave processor is consistent with the value of the acquisition period of the master processor; and
entering, in a case that the value of the acquisition period of the slave processor is inconsistent with the value of the acquisition period of the master processor, the fail-safe state to cause each output channel of the slave processor to output the preset safe level.

In an implementation of the present disclosure, after the second processing result of the second acquired data is obtained, the method further includes:
receiving a first processing result from the master processor;
determining whether the first processing result is consistent with the second processing result;
entering, in a case that the first processing result is inconsistent with the second processing result, the fail-safe state to cause each output channel of the slave processor to output the preset safe level; and
executing the second processing result in a case that the first processing result is consistent with the second processing result.

The first processing result is obtained by the slave processor performing predetermined data processing on the first acquired data.

In an implementation of the present disclosure, executing the second processing result includes:
controlling a level state of a first output channel of the slave processor according to the second processing result.

A first output channel of the master processor is connected to a first input terminal of a first AND gate circuit, a first output channel of the slave processor is connected to a second input terminal of the first AND gate circuit, and a level state of the first output channel of the master processor is determined by the master processor according to the first processing result.

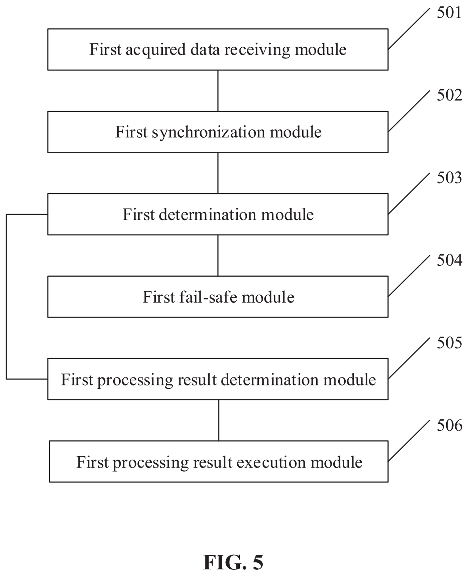

In correspondence with the above-described method embodiments, a system for processing a train signal, applied to a master processor, is provided in an embodiment of the present disclosure. The master processor is communicatively connected to a slave processor. A first hardware device is configured to simultaneously send a time synchronization hardwire signal to the master processor and the slave processor such that time synchronization is performed between the master processor and the slave processor. As shown in FIG. 5, the system for processing a train signal includes a first acquired data receiving module 501, a first synchronization module 502, a first determination module 503, a first fail-safe module 504, a first processing result determination module 505 and a first processing result execution module 506.

The first acquired data receiving module 501 is configured to receive first acquired data via a first input channel of the master processor.

The first synchronization module 502 is configured to send the first acquired data to the slave processor and receive second acquired data from the slave processor.

The first determination module 503 is configured to determine whether the first acquired data is consistent with the second acquired data, and further configured to:
trigger the first fail-safe module 504 in a case that the first acquired data is inconsistent with the second acquired data, where the first fail-safe module 504 is configured to enter a fail-safe state to cause each output channel of the master processor to output a preset safe level; and
trigger the first processing result determination module 505 in a case that the first acquired data is consistent with the second acquired data, where the first processing result determination module 505 is configured to perform predetermined data processing on the first acquired data to obtain a first processing result of the first acquired data.

The first processing result execution module 506 is configured to execute the first processing result.

The first acquired data is acquired by the master processor from a target position at a first time instant through a first acquisition circuit, and the second acquired data is acquired by the slave processor from the target position at the first time instant through a second acquisition circuit.

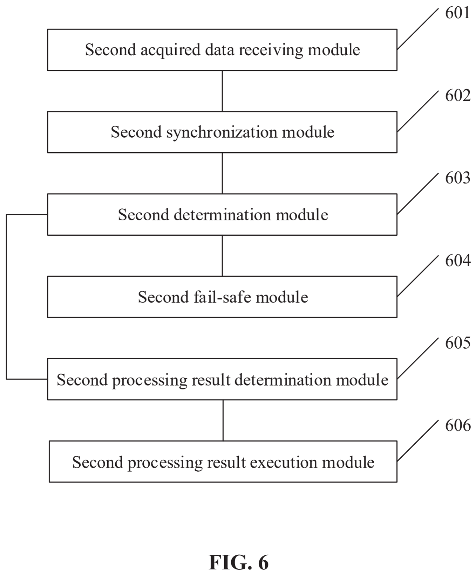

A system for processing a train signal, applied to a slave processor, is further provided according to an embodiment of the present disclosure. The slave processor is communicatively connected to a master processor. A first hardware device is configured to simultaneously send a time synchronization hardwire signal to the master processor and the slave processor such that time synchronization is performed on the master processor and the slave processor. As shown in FIG. 6, the system for processing a train signal includes a second acquired data receiving module 601, a second synchronization module 602, a second determination module 603, a second fail-safe module 604, a second processing result determination module 605 and a second processing result execution module 606.

The second acquired data receiving module 601 is configured to receive second acquired data via a first input channel of the slave processor.

The second synchronization module 602 is configured to receive first acquired data from the master processor and send the second acquired data to the master processor.

The second determination module 603 is configured to determine whether the first acquired data is consistent with the second acquired data, and further configured to:
trigger the second fail-safe module 604 in a case that the first acquired data is inconsistent with the second acquired data, where the second fail-safe module 604 is configured to enter a fail-safe state to cause each output channel of the slave processor to output a preset safe level; and
trigger the second processing result determination module 605 in a case that the first acquired data is consistent with the second acquired data, where the second processing result determination module 605 is configured to perform predetermined data processing on the second acquired data to obtain a second processing result of the second acquired data.

The second processing result execution module 606 is configured to execute the second processing result.

The first acquired data is acquired by the master processor from a target position at a first time instant through a first acquisition circuit, and the second acquired data is acquired by the slave processor from the target position at the first time instant through a second acquisition circuit.

In correspondence with the above-described method embodiments and system embodiments, a device for processing a train signal is further provided according to an embodiment of the present disclosure. The device includes:
a memory, configured to store a computer program; and
a processor, configured to, when executing the computer program, perform the method for processing the train signal described in any of the above embodiments.

It should be noted that in the specification, relationship terms such as "first" and "second" are only used to distinguish one entity or operation from another entity or operation, rather than to necessitate or imply an actual relationship or order between the entities or operations. Moreover, terms "include", "comprise" or any variants thereof are intended to be non-exclusive. Therefore, a process, method, article or device including a series of elements includes not only the elements but also other elements that are not enumerated, or further includes elements inherent to the process, method, article or device. Unless expressively limited, the statement "including a..." does not exclude the case that other identical elements may exist in the process, method, article or device including the series of elements.

As further be appreciated by those skilled in the art, the units and algorithmic steps in the examples described according to the embodiments disclosed herein may be implemented in forms of electronic hardware, computer software or the combination of the both. To illustrate the interchangeability of the hardware and the software clearly, the components and the steps in the examples are described generally according to functions in the above description. Whether or not these functions are performed in hardware or software depends on the specific application and design constraints of the technical solution. Those skilled in the art may implement the described functionality in various manners for each specific application, while such implementations should not be considered to be beyond the scope of the present disclosure.

Specific examples are used herein to describe the principle and implementation of the present disclosure. The description of the above embodiments is only for facilitating understanding of the technical solutions and core ideas of the present disclosure. It should be noted that, several improvements and modifications may be made by those skilled in the art to the present disclosure without departing from the principle of the present disclosure, and these improvements and modifications also fall within the protection scope of the present disclosure.

## Claims

1. A method for processing a train signal, applied to a master processor, wherein the master processor is communicatively connected to a slave processor, and a first hardware device is configured to simultaneously send a time synchronization hardwire signal to the master processor and the slave processor for implementing time synchronization between the master processor and the slave processor, and wherein the method for processing the train signal comprises:
receiving first acquired data via a first input channel of the master processor;
sending the first acquired data to the slave processor and receiving second acquired data from the slave processor;
determining whether the first acquired data is consistent with the second acquired data;
entering, in a case that the first acquired data is inconsistent with the second acquired data, a fail-safe state to cause each output channel of the master processor to output a preset safe level; and
performing, in a case that the first acquired data is consistent with the second acquired data, predetermined data processing on the first acquired data to obtain a first processing result of the first acquired data and executing the first processing result, wherein
the first acquired data is acquired by the master processor from a target position at a first time instant through a first acquisition circuit, and the second acquired data is acquired by the slave processor from the target position at the first time instant through a second acquisition circuit.

2. The method according to claim 1, further comprising:
verifying, on receiving the time synchronization hardwire signal from the first hardware device, whether a period of the time synchronization hardwire signal is identical to a preset acquisition period by using a first timer arranged in the master processor; and
entering, in a case that the period of the time synchronization hardwire signal is different from the preset acquisition period, the fail-safe state to cause the each output channel of the master processor to output the preset safe level.

3. The method according to claim 1, wherein the sending the first acquired data to the slave processor and receiving second acquired data from the slave processor comprises:
sending a first request command carrying the first acquired data and attribute information of the first acquired data to the slave processor; and
receiving a first response command carrying the second acquired data and attribute information of the acquired data from the slave processor.

4. The method according to claim 1, wherein the first hardware device is a CPLD.

5. The method according to claim 1, wherein the master processor and the slave processor are communicatively connected with each other in a wired communication and/or wireless communication manner.

6. The method according to claim 1, further comprising:
after power-on, acquiring a value of an acquisition period of the master processor and receiving a value of an acquisition period of the slave processor from the slave processor;
determining whether the value of the acquisition period of the master processor is consistent with the value of the acquisition period of the slave processor;
entering, in a case that the value of the acquisition period of the master processor is inconsistent with the value of the acquisition period of the slave processor, the fail-safe state to cause the each output channel of the master processor to output the preset safe level; and
enabling the first hardware device in a case that the value of the acquisition period of the master processor is consistent with the value of the acquisition period of the slave processor, and controlling the first hardware device to simultaneously send the time synchronization hardwire signal to the master processor and the slave processor based on the acquisition period.

7. The method according to any one of claims 1 to 6, wherein after the first processing result of the first acquired data is obtained, the method further comprises:
receiving a second processing result from the slave processor;
determining whether the first processing result is consistent with the second processing result;
entering, in a case that first processing result is inconsistent with the second processing result, the fail-safe state to cause the each output channel of the master processor to output the preset safe level; and
executing the first processing result in a case that the first processing result is consistent with the second processing result, wherein
the second processing result is obtained by the slave processor performing the predetermined data processing on the second acquired data.

8. The method according to claim 7, wherein the executing the first processing result comprises:
controlling a level state of a first output channel of the master processor according to the first processing result, wherein
the first output channel of the master processor is connected to a first input terminal of a first AND gate circuit, a first output channel of the slave processor is connected to a second input terminal of the first AND gate circuit, and a level state of the first output channel of the slave processor is determined by the slave processor according to the second processing result.

9. A method for processing a train signal, applied to a slave processor, wherein the slave processor is communicatively connected to a master processor, and a first hardware device is configured to simultaneously send a time synchronization hardwire signal to the master processor and the slave processor for implementing time synchronization between the master processor and the slave processor, and wherein the method for processing the train signal comprises:
receiving second acquired data via a first input channel of the slave processor;
receiving first acquired data from the master processor and sending the second acquired data to the master processor;
determining whether the first acquired data is consistent with the second acquired data;
entering, in a case that the first acquired data is inconsistent with the second acquired data, a fail-safe state to cause each output channel of the slave processor to output a preset safe level; and
performing, in a case that the first acquired data is consistent with the second acquired data, predetermined data processing on the second acquired data to obtain a second processing result of the second acquired data and executing the second processing result, wherein
the first acquired data is acquired by the master processor from a target position at a first time instant through a first acquisition circuit, and the second acquired data is acquired by the slave processor from the target position at the first time instant through a second acquisition circuit.

10. The method according to claim 9, further comprising:
verifying, on receiving the time synchronization hardwire signal from the first hardware device, whether a period of the time synchronization hardwire signal is identical to a preset acquisition period by using a second timer arranged in the slave processor; and
entering, in a case that the period of the time synchronization hardwire signal is different from the preset acquisition period, the fail-safe state to cause the each output channel of the slave processor to output the preset safe level.

11. The method according to claim 9, wherein the receiving first acquired data from the master processor and sending the second acquired data to the master processor comprises:
receiving a first request command carrying the first acquired data and attribute information of the first acquired data from the master processor; and
sending a first response command carrying the second acquired data and attribute information of the second acquired data to the master processor.

12. The method according to claim 9, further comprising:
after power-on, acquiring a value of an acquisition period of the slave processor and sending the value to the master processor and receiving a value of an acquisition period of the master processor from the master processor;
determining whether the value of the acquisition period of the slave processor is consistent with the value of the acquisition period of the master processor; and
entering, in a case that the value of the acquisition period of the slave processor is inconsistent with the value of the acquisition period of the master processor, the fail-safe state to cause the each output channel of the slave processor to output the preset safe level.

13. The method according to any one of claims 9 to 12, wherein after the second processing result of the second acquired data is obtained, the method further comprises:
receiving a first processing result from the master processor;
determining whether the first processing result is consistent with the second processing result;
entering, in a case that the first processing result is inconsistent with the second processing result, the fail-safe state to cause the each output channel of the slave processor to output the preset safe level; and
executing the second processing result in a case that the first processing result is consistent with the second processing result, wherein
the first processing result is obtained by the slave processor performing the predetermined data processing on the first acquired data.

14. The method according to claim 13, wherein the executing the second processing result comprises:
controlling a level state of a first output channel of the slave processor according to the second processing result, wherein
a first output channel of the master processor is connected to a first input terminal of a first AND gate circuit, a first output channel of the slave processor is connected to a second input terminal of the first AND gate circuit, and a level state of the first output channel of the master processor is determined by the master processor according to the first processing result.

15. A system for processing a train signal, applied to a master processor, wherein the master processor is communicatively connected to a slave processor, and a first hardware device is configured to simultaneously send a time synchronization hardwire signal to the master processor and the slave processor for implementing time synchronization between the master processor and the slave processor, and wherein the system for processing the train signal comprises:
a first acquired data receiving module, configured to receive first acquired data via a first input channel of the master processor;
a first synchronization module, configured to send the first acquired data to the slave processor and receive second acquired data from the slave processor;
a first determination module, configured to determine whether the first acquired data is consistent with the second acquired data, and further configured to:
trigger a first fail-safe module in a case that the first acquired data is inconsistent with the second acquired data, wherein the first fail-safe module is configured to enter a fail-safe state to cause each output channel of the master processor to output a preset safe level; and
trigger a first processing result determination module in a case that the first acquired data is consistent with the second acquired data, wherein the first processing result determination module is configured to perform predetermined data processing on the first acquired data to obtain a first processing result of the first acquired data; and
a first processing result execution module, configured to execute the first processing result, wherein
the first acquired data is acquired by the master processor from a target position at a first time instant through a first acquisition circuit, and the second acquired data is acquired by the slave processor from the target position at the first time instant through a second acquisition circuit.

16. A system for processing a train signal, applied to a slave processor, wherein the slave processor is communicatively connected to a master processor, and a first hardware device is configured to simultaneously send a time synchronization hardwire signal to the master processor and the slave processor for performing time synchronization between the master processor and the slave processor, and wherein the system for processing the train signal comprises:
a second acquired data receiving module, configured to receive second acquired data via a first input channel of the slave processor;
a second synchronization module, configured to receive first acquired data from the master processor and send the second acquired data to the master processor;
a second determination module, configured to determine whether the first acquired data is consistent with the second acquired data, and further configured to:
trigger a second fail-safe module in a case that the first acquired data is inconsistent with the second acquired data, wherein the second fail-safe module is configured to enter a fail-safe state to cause each output channel of the slave processor to output a preset safe level; and
trigger a second processing result determination module in a case that the first acquired data is consistent with the second acquired data, wherein the second processing result determination module is configured to perform predetermined data processing on the second acquired data to obtain a second processing result of the second acquired data; and
a second processing result execution module, configured to execute the second processing result, wherein
the first acquired data is acquired by the master processor from a target position at a first time instant through a first acquisition circuit, and the second acquired data is acquired by the slave processor from the target position at the first time instant through a second acquisition circuit.

17. A device for processing a train signal, comprising:
a memory, configured to store a computer program; and
a processor, configured to, when executing the computer program, perform the method for processing the train signal according to any one of claims 1 to 8 or perform the method for processing the train signal according to any one of claims 9 to 14.
